Europäisches Patentamt

European Patent Office

Office européen des brevets

(19)

(11) Numéro de publication: **0 119 900**
**A1**

# (12) DEMANDE DE BREVET EUROPEEN

(21) Numéro de dépôt: **84400418.4**

(22) Date de dépôt: **02.03.84**

(51) Int. Cl.³: **B 60 P 3/12**, B 60 S 9/10

(30) Priorité: **02.03.83 FR 8303647**

(43) Date de publication de la demande: **26.09.84**
**Bulletin 84/39**

(84) Etats contractants désignés: **AT BE CH DE FR IT LI LU NL SE**

(71) Demandeur: **CREUSOT-LOIRE, 15, rue Pasquier, F-75383 Paris Cedex 08 (FR)**

(72) Inventeur: **Galin, Gilbert, 3 place de la Liberté, F-42400 Saint-Chamond (FR)**
Inventeur: **Molinero, Michel, 12 Résidence le Pavillon, F-42320 Saint-Paul-en-Jarez (FR)**

(74) Mandataire: **Dupuy, Louis et al, CREUSOT-LOIRE 15 rue Pasquier, F-75383 Paris Cedex 8 (FR)**

(54) **Véhicule de dépannage pour engins routiers lourds et procédé d'utilisation.**

(57) Véhicule de dépannage équipé à sa partie arrière de bêches d'ancrage relevables (3) ainsi que d'un triangle de remorquage (10) pointant vers l'extérieur.

Pour soulever l'avant du véhicule (22) à remorquer, on relie le triangle aux bêches d'ancrage par des tirants (18) et on relie la pointe (12) du triangle à l'essieu avant (27) du véhicule à dépanner par un timon (23) et une attache universelle (28, 29, 30). Le timon porte une cale (33) que l'on place sous le pare-chocs avant (34). On soulève l'ensemble en faisant sortir la tige des vérins (5) d'actionnement des bêches d'ancrage.

EP 0 119 900 A1

## Véhicule de dépannage pour engins routiers lourds et procédé d'utilisation

La présente invention se rapporte à un véhicule de dépannage pour engins routiers lourds, par exemple engins dont la charge par essieu peut être de l'ordre de sept à huit tonnes.

Les véhicules aménagés pour le dépannage comportent généralement une grue de manutention permettant de soulever la partie avant du véhicule à dépanner de façon à ce que l'ensemble ainsi constitué puisse rouler de manière assimilable à une remorque et son tracteur. La partie arrière de ce genre de véhicule est équipée d'un dispositif de liaison triangulée rigide et articulé, appelé triangle de remorquage, que l'on relie alors à l'extrémité avant de l'engin à dépanner, et qui absorbe en cours de route les sollicitations engendrées par les accélérations et décélérations du train routier en cours de déplacement.

En général, ces sollicitations sont reprises sur l'engin à dépanner au niveau du pare-chocs avant qui n'est pas du tout conçu ni étudié pour résoudre ce genre de problème. Les éléments fragiles de l'avant de l'engin à dépanner, tels que radiateurs, tubulures, cablages électriques, n'autorisent pas, au risque d'être détériorés, une fixation suffisamment efficace pour absorber les sollicitations dues au remorquage et au levage combinés.

D'autre part, aucun véhicule dans les différents types et marques existants n'est constitué à l'avant de façon identique, ce qui interdit de déterminer à l'avance un processus précis d'accrochage en vue du dépannage. De plus, le véhicule dépanné étant pendu au crochet de la grue, ce dernier subit des contraintes latérales importantes lors du braquage du véhicule dépanneur, par suite du mouvement relatif du crochet par rapport au véhicule dépanné. Ces contraintes n'autorisent pas une vitesse de déplacement de l'ensemble supérieur à 30 Km/h environ.

Par ailleurs, l'utilisation de la grue pour soulever l'avant du véhicule dépanné entraîne pour l'ensemble un encombrement en hauteur souvent incompatible avec la totalité des ouvrages d'art existants.

Enfin, les engins accidentés sont rarement accessibles directement et la préparation du dépannage commence par un halage, à l'aide du treuil de halage, du véhicule à dépanner pour l'amener dans une position favorable à sa prise en charge. De façon à permettre ce halage en dépit du poids élevé du véhicule à dépanner, les véhicules de dépannage connus, tels que par exemple le véhicule commercialisé par la société demanderesse sous la référence "Pinguely GIC 136", possèdent à leur partie arrière des dispositifs d'ancrage relevables agissant par pénétration dans le sol, dits "bêches d'ancrage", qui sont généralement à commande hydraulique et qui sont strictement réservés à cette fonction.

La présente invention concerne un véhicule de dépannage pour engins routiers lourds ne présentant pas les inconvénients énumérés ci-dessus. Le véhicule de dépannage de l'invention est équipé à sa partie arrière de dispositifs d'ancrage relevables, ainsi que d'un triangle de remorquage relevable à pointe dirigée vers l'extérieur, et il est caractérisé en ce que la partie extrême du côté de sa pointe dudit triangle peut être reliée, en position basse de travail de celui-ci, aux parties extrêmes aval des dispositifs d'ancrage, alors en position relevés, ou partiellement relevés, par des liens articulés à leurs deux extrémités, en ce que la pointe dudit triangle est munie d'un moyen de liaison à au moins deux axes d'articulation perpendiculaires, du type cardan, et en ce qu'il est équipé d'un outillage permettant de soulever, par un mouvement ascendant des dispositifs d'ancrage, la partie avant de l'engin à dépanner, constitué par un timon dont une extrémité vient se fixer de manière articulée dans ledit moyen de liaison, dont l'autre extrémité se termine par une articulation permettant la fixation d'un dispositif universel d'accrochage à l'essieu avant dudit engin à dépanner, du type fonctionnant par emprisonnement et serrage, et dont la partie médiane comporte un appui réglable, en position longitudinale, par coulissement le long du timon et supportant une cale de soutien de l'avant dudit engin.

L'invention sera mieux comprise à l'aide de la description suivante d'un exemple de réalisation en référence aux dessins annexés dans lesquels :

- la figure 1 représente schématiquement la partie arrière du véhicule de l'invention tractant un camion à dépanner avec l'avant de celui-ci relevé,
- la figure 2 est une vue plus agrandie de la partie de la figure 1 concernée par la présente invention,
- la figure 3 est une vue en perspective partiellement éclatée de la partie arrière du véhicule dépanneur de l'invention en position de travail,
- la figure 4 représente la mise en place du dispositif de remorquage avec levage dans le cas où l'essieu avant du véhicule à dépanner n'est pas un essieu moteur,
- la figure 5 représente schématiquement l'utilisation du véhicule de l'invention dans le cas où celui-ci remorque un camion sans soulever l'avant de ce dernier,

- la figure 6 est une représentation plus détaillée du dispositif de remorquage de la figure 5.

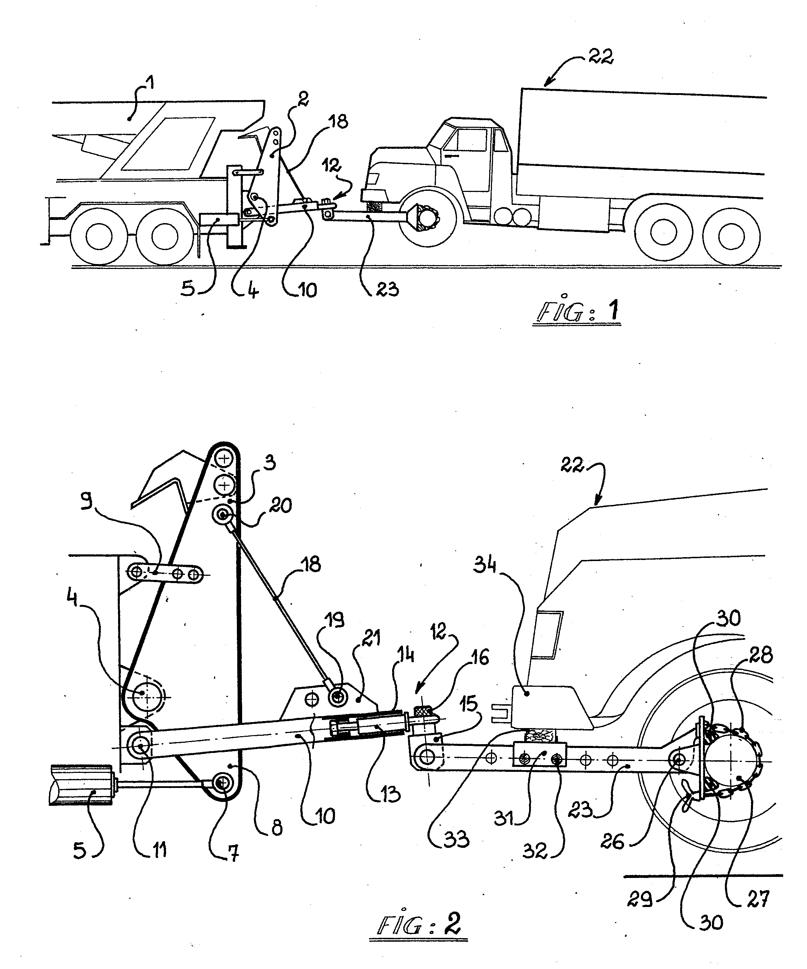

En se reportant tout d'abord à l'ensemble des figures 1 à 3, le véhicule de dépannage de l'invention, dont on n'a représenté que la partie arrière, est muni, de manière classique, d'une grue de manutention 1, d'un treuil de halage non apparent sur les dessins, et de bêches d'ancrage 2 et 3 articulées sur l'arrière du véhicule autour d'axes 4, et commandées par des vérins d'actionnement 5 à double-effet dont le corps est fixé de façon articulée aux longerons 6 du châssis et dont la tige est fixée en 7 de façon articulée aux bras 8 de retenue et de mise en place des bêches d'ancrage. En position haute, en particulier pendant le déplacement du véhicule avant son arrivée sur le site, les bêches d'ancrage sont maintenues à l'arrière du véhicule dans leur position grâce à des attaches amovibles 9, ce qui permet de relâcher la pression d'huile dans les vérins 5.

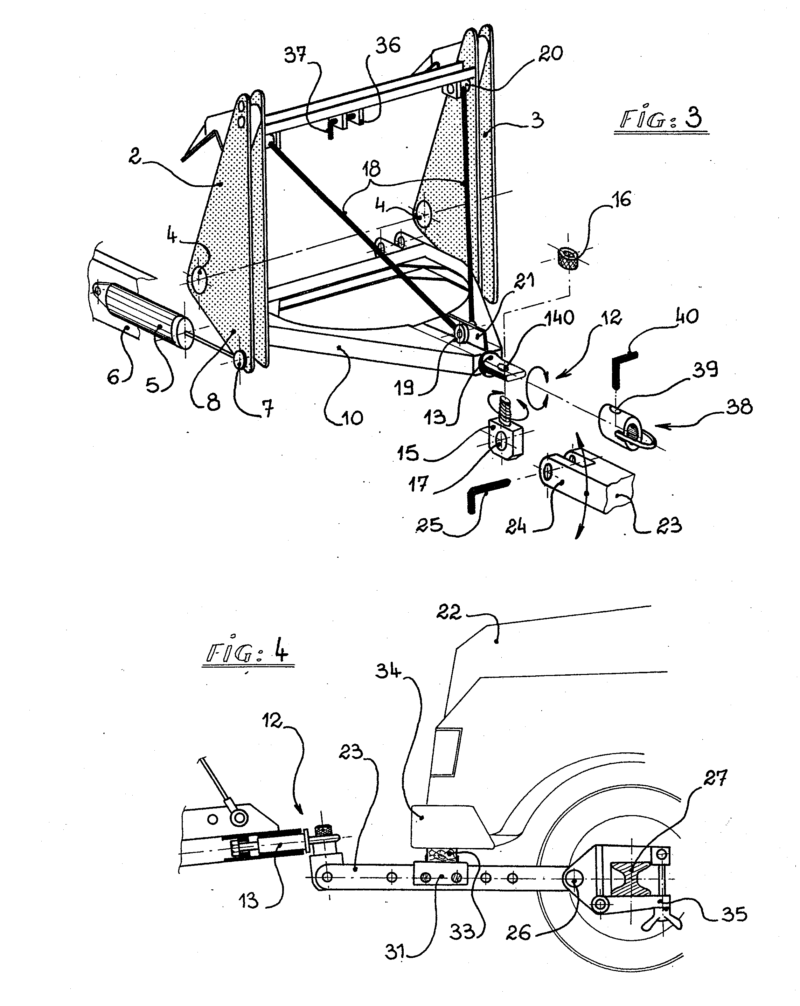

Le véhicule de l'invention est équipé par ailleurs d'un triangle de remorquage 10 dont la pointe est dirigée vers l'extérieur. Le triangle 10 est relevable autour d'articulations 11 pour le transport, et il est muni à sa pointe d'une liaison 12 du type cardan pouvant tourillonner, comme indiqué par les flèches sur la figure 3, selon deux axes perpendiculaires. Comme on le voit sur les dessins, cette liaison 12 comporte une pièce longitudinale 13 qui tourillonne dans un palier 14 situé à la pointe du triangle et qui est munie d'un alésage 140 orthogonal à la direction longitudinale de cette pièce 13, et qui peut recevoir une autre pièce tourillonnante 15, blocable à l'aide d'un écrou 16, et également munie d'un alésage orthogonal 17.

Par ailleurs, selon une caractéristique essentielle de l'invention, on relie, lorsque le triangle 10 est en position basse de travail, la pointe de ce triangle aux extrémités aval des bêches d'ancrage par deux tirants 18 venant s'articuler par des axes 19 et 20 sur un plat 21 associé à la tête de pointe d'une part et sur les extrémités des bêches d'ancrage d'autre part. Une fois cet ensemble mis en place, tel que dessiné sur la figure 3, il suffit, après avoir enlevé les attaches (9, figure 2) de donner à l'aide des vérins 5 un mouvement ascendant ou descendant aux bêches d'ancrage pour lever ou abaisser plus ou moins la pointe du triangle 10.

Conformément à l'invention, le véhicule est équipé, pour permettre de soulever l'avant de l'engin 22 à dépanner, d'un outillage complémen-

4

taire constitué par un timon 23 venant d'un côté s'articuler, par l'intermédiaire d'une chape 24 et d'une clavette 25, dans l'alésage 17 de la pièce 15, et de l'autre côté comportant, de manière articulée autour d'un axe 26, un outillage d'accrochage à l'essieu avant 27 du véhicule 22 comportant de manière classique deux chaînes 28 de serrage avec tendeurs 29 et blocs d'élastomère 30. Par ailleurs, le timon 23 est équipé d'un appui 31 de position réglable longitudinalement grâce à des plots 32, l'appui 31 étant conformé de manière à recevoir une cale en bois 33 destinée à soutenir le pare-choc avant 34 du camion 22.

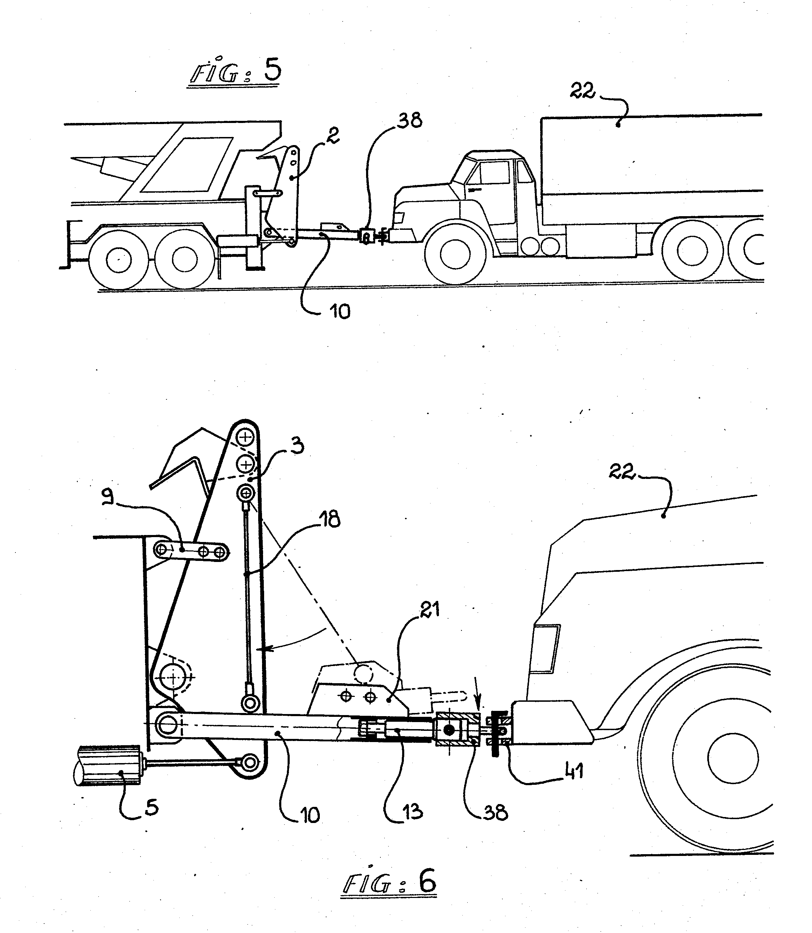

Dans le cas où l'essieu avant du camion à dépanner n'est pas un essieu moteur, le dispositif à chaînes et tendeurs peut être remplacé par un simple dispositif de serrage par pince tel que le dispositif 35 représenté sur la figure 4.

En position de transport, les tirants 18 sont dégagés de leur fixation inférieure 19, et le triangle 10 est relevé, l'alésage 140 de sa pointe venant se bloquer dans une pièce de maintien 36 grâce à une clavette 37.

Dans le cas général d'utilisation du véhicule de l'invention avec levage de l'avant du camion 22, conformément aux figures 1 à 4, on procède de la façon suivante :

A l'arrivée sur le site, on commence si c'est nécessaire à haler le véhicule accidenté ou à dépanner pour l'amener dans une position favorable à sa prise en charge. On procède à cette opération de manière classique à l'aide du treuil de halage et en ancrant au sol s'il le faut le véhicule dépanneur à l'aide des bêches d'ancrage (2, 3).

On enlève la clavette 37 et, à l'aide de la grue de manutention 1, on descend, les bêches d'ancrage (2, 3) étant en position haute, le triangle 10 de manière à pouvoir mettre en place les tirants 18. On crée ainsi un ensemble rigide permettant, par action des vérins 5, de relever plus ou moins le triangle 10. Dans le cas où les tirants 18 sont remplacés par des liens souples, ceux-ci peuvent alors être placés à demeure. On met en place la pièce 15 puis la chape d'extrémité 24 du timon 23 à l'aide de la clavette 25.

On règle la position longitudinale de la pièce d'appui 31 de manière à l'amener sous le pare-chocs 34 avant du camion 22.

On choisit une cale en bois 33 d'épaisseur suffisante pour venir soutenir le pare-chocs 34 quand le timon sera mis en place sur l'essieu 27. Si aucune cale n'a l'épaisseur adéquate, on en scie une à l'épaisseur désirée à l'aide d'une scie et de l'étau équipant le véhicule dépanneur.

La cale en bois mise en place, on accroche l'autre extrémité du timon à l'essieu avant 27 du camion 22, soit à l'aide du dispositif (28, 29, 30) de la figure 2 si l'essieu 27 est moteur, soit à l'aide du dispositif 35 de la figure 4 si l'essieu 27 n'est pas moteur.

En faisant sortir les tiges des vérins 5, on provoque alors la montée du triangle 10 et, par le timon 23, le soulèvement de la partie avant du camion 22. On met alors en place la pièce de fixation (9, figure 2), ce qui permet de relâcher la pression d'huile dans les vérins 5. Le camion 22 peut alors être remorqué sur route, tel que schématisé sur la figure 1, sans que l'attelage présente les inconvénients des dispositifs antérieurs, ce qui leur permet d'atteindre une vitesse de croisière de l'ordre de 50 à 70 Km/h.

Dans certains cas, par exemple lorsque l'engin 22 est simplement en panne sans avoir été accidenté, on pourra utiliser le véhicule de l'invention pour assurer un simple remorquage sans soulèvement de l'avant du camion 22.

Dans ce but, le véhicule de l'invention est avantageusement équipé d'un outillage supplémentaire constitué par une simple pièce de liaison 38, apparente sur les figures 3, 5, et 6, et venant se fixer, grâce à un alésage 39 et une clavette 40, dans l'alésage 140 de la pièce 13 située à la pointe du triangle 10. Les tirants 18 étant rabattus comme représenté sur la figure 6, l'attelage du camion 22 s'effectue par simple fixation de la pièce 38 à la chape d'attelage 41 prévue à cette effet sur le camion 22. Celui-ci peut alors être simplement remorqué comme représenté sur les figures 5 et 6.

REVENDICATIONS

1.- Véhicule de dépannage pour engins routiers lourds (22), équipé à sa partie arrière de dispositifs d'ancrage relevables (2, 3), tels que des "'bêches d'ancrage", ainsi que d'un triangle de remorquage relevable (10) pointant vers l'extérieur,
caractérisé en ce que la partie extrême (2) du côté de sa pointe dudit triangle peut être reliée, en position basse de travail de celui-ci, aux parties extrêmes aval des dispositifs d'ancrage, alors en position relevés ou partiellement relevés, par des liens (18) articulés à leurs deux extrémités,
en ce que la pointe dudit triangle est munie d'un moyen de liaison (13, 15) à au moins deux axes d'articulation perpendiculaires, du type cardan,
et en ce qu'il est équipé d'un outillage permettant de soulever, par un mouvement ascendant des dispositifs d'ancrage, la partie avant de l'engin à dépanner, constitué par un timon (23) dont une extrémité (24) vient se fixer de manière articulée dans ledit moyen de liaison, dont l'autre extrémité se termine par une articulation (26) permettant la fixation d'un dispositif universel d'accrochage (28, 29, 30 ou 35) à l'essieu avant (27) dudit engin à dépanner, du type fonctionnant par emprisonnement et serrage, et dont la partie médiane comporte un appui (31) réglable en position longitudinale par coulissement le long du timon et supportant une câle (33) de soutien de l'avant (34) dudit engin.

2.- Véhicule de dépannage selon la revendication 1,
caractérisé en ce qu'il est en outre équipé d'un outillage permettant de remorquer l'engin à dépanner sans soulèvement de sa partie avant et constitué par une liaison (38) venant s'articuler sur la pointe dudit triangle d'une part, et sur le point d'attelage (41) du véhicule à dépanner d'autre part.

3.- Procédé d'utilisation du véhicule de dépannage selon la revendication 1, dans le cas d'une traction de l'engin à dépanner avec levage de sa partie avant,
caractérisé par la série d'opérations suivantes :
- arrivée sur le site avec les dispositifs d'ancrage et le triangle de remorque en position haute de transport,
- halage si nécessaire de l'engin à dépanner pour l'amener dans une position favorable à sa prise en charge,
- déblocage des dispositifs d'ancrage et du triangle et mise en place des liens les reliant au cas où ceux-ci ne sont pas placés à demeure,
- fixation du timon sur la pointe du triangle et sur l'essieu avant de l'engin à dépanner et mise en place de l'appui et de la cale associée sous la partie avant, pare-chocs si possible, dudit engin, ladite câle étant préalablement choisie ou façonnée sur place pour venir en appui sur ladite partie avant,

- levage de l'avant dudit engin par mouvement ascendant des dispositifs d'ancrage et bloquage de ceux-ci dans leur position alors obtenue,

- traction de l'engin par le véhicule de dépannage.

_FIG: 1_

_FIG: 2_

FIG: 3

FIG: 4

_FIG: 5_

_FIG: 6_

0119900

Office européen
des brevets

**RAPPORT DE RECHERCHE EUROPEENNE**

Numéro de la demande

EP 84 40 0418

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | US-A-3 593 865 (MOOR et al.)<br>* Colonne 3, ligne 52 - colonne 4, ligne 7; colonne 3, lignes 9-11; figures 1,2,4,5,7 *<br><br>--- | 1,3 | B 60 P 3/12<br>B 60 S 9/10 |
| A | FR-A-1 568 193<br>(MASSEY-FERGUSON)<br>* Page 3, colonne de droite, paragraphe 1; figure 4 *<br><br>--- | 1,3 | |
| A | US-A-3 127 037 (NEWMAN)<br>* Colonne 5, ligne 72 - colonne 6, ligne 2; figure 1 *<br><br>--- | 1 | |
| A | US-A-3 610 447 (ORTIZ)<br>* Colonne 2, lignes 29-33; figure 2 *<br><br>--- | 1,3 | DOMAINES TECHNIQUES RECHERCHES (Int. Cl. ³) |
| A | DE-A-2 346 025 (MEILLER FAHRZEUG- UND MASCHINENFABRIK)<br>* Page 4, dernier paragraphe - page 5, ligne 2; figure 1 *<br><br>--- | 2 | B 60 P 3/00<br>B 60 S 9/00<br>B 60 D 1/00 |
| A | US-A-3 667 631 (BISHOP)<br>* Colonne 3, lignes 34-62; figure 1 *<br><br>----- | 1,3 | |

Le présent rapport de recherche a été établi pour toutes les revendications

| Lieu de la recherche<br>LA HAYE | Date d'achèvement de la recherche<br>28-03-1984 | Examinateur<br>OSBORNE J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82